# EUROPEAN PATENT SPECIFICATION

(11) **EP 0 930 223 B1**
(45) Date of publication and mention of the grant of the patent: **14.05.2003**
(21) Application number: 97933697.1
(22) Date of filing: 30.07.1997
(51) Int. Cl.: B62M 11/06, B62M 9/14

(54) **PEDAL-DRIVEN CHAIN WHEEL WITH GEAR-CHANGE SYSTEM**
KETTENRAD MIT GANGSCHALTUNGEINRICHTUNG
PLATEAU DE PEDALIER AVEC SYSTEME DE TRANSMISSION

(43) Date of publication of application: 21.07.1999
(73) Proprietor: Garmendia Altuna, Cruz, 20006 San Sebastian (ES)
(72) Inventor: Garmendia Altuna, Cruz, 20006 San Sebastian (ES)
(86) International application number: ES9700196
(87) International publication number: WO99006269

(56) References cited:
- WO-A-95/13209
- WO-A-96/15936
- FR-A- 896 444
- GB-A- 507 380
- GB-A- 696 096
- US-A- 1 867 337

## Description

The invention described herein a pedal-driven chain wheel―refers to a chain wheel of the kind used in pedal-driven systems as defined in the preamble of claim 1. It incorporates a gear-change system and automatic adjustment of the alignment of the driving chain with the driving sprocket and rear sprocket wheel.

US-A-1 867 337 shows a pedal-driven chain wheel with a gear-change system according to the preamble of claim 1.

This improved pedal-driven chain wheel will therefore be useful in the industrial manufacture of pedal-driven systems, such as those used in bicycles and similar vehicles, taking the place of traditional dérailleur systems based on varying-size sprocket wheels.

The pedal driven systems known in the current state of technology are based on the traditional system of a chain wheel that meshes with a roller chain to transmit motion to a rear sprocket, subsequently improved by incorporating gear-change systems that act on the relationship between chain wheel and rear sprocket wheel. Thus, in traditional bicycle systems,. the gear-change systems are mainly dérailleur and epicyclic. The dérailleur system consists of a chain wheel made of several driving sprockets of increasing or decreasing size, placed on top of each other and joined, forming a gear drum. In this way, by derailing the driving chain from one sprocket wheel to another, the varying size of the sprocket wheels accordingly changes the speed ratio between the peddling rate and the rotation of the body that transmits motion to the bicycle wheel, while the rear sprocket wheel rotates in keeping with the latter.

The second method of changing speed―the epicyclic gear system consisting of several pinions―is similar to the previous one, except that the stepped gear drum consists of pinions instead of sprockets.

Nonetheless, the two systems are compatible, and pedal-driven systems incorporating gears normally use both the dérailleur and epicyclic (or rear hub) systems. Of course, in order to move the chain from one gear to another―whether sprocket wheel or pinion system―a roller guide is needed to move the chain sideways to align it with the right gear and, lastly, a tensioning device is always needed, since a change of gear brings about a change in the slack of the driving chain. These dérailleur and epicyclic systems enable the speed to be regulated satisfactorily, providing a large number of different driving sprocket-rear sprocket wheel ratios. However, a serious problem that is typical of these systems is that the chain is often lost when it comes off one of the gears―whether driving sprocket or rear hub―as a result of its being continually shifted sideways from one gear to another and since the elements of this shifting mechanism become less accurate over time.

The invention described herein, an improved pedal-driven chain wheel, introduces a driver sprocket capable of providing a satisfactory solution to the aforementioned problems. In this invention, the multiple-sprocket system is replaced by a gear system consisting of a gearbox combined with an automatic sprocket shifting device that guarantees that the chain is kept in the plane defined by the sprocket and hub gears at all times.

This improved pedal-driven chain wheel basically consists of a device enclosed in a casing, which encompasses the pedal axle. This axle rotates at the same rate as a gear ring which activates another on a parallel axle, thus transmitting the motion from the former to the latter.

This second axle incorporates a gear drum, whose gear rings mesh with those of another shaft located opposite it. In the first shaft, the gear rings rotate freely except for one which is clamped by a key, which slides along a key slot parallel to the drum axle and is activated by a spring mechanism. The two gear drums thus perform in the same way as a gearbox, by varying the speed ratio with the rotation of the third axle of the second gear drum connected to the sprocket wheel.

In turn, the sprocket wheel is fixed to the previous rotating axle by a movable bearing, thus guaranteeing its alignment with the plane defined by the rear hub and the chain. Nonetheless, as a greater guarantee that the chain will not be lost accidentally, the sprocket wheel has a rim fitted round the teeth throughout its perimeter.

The following paragraphs give a detailed description of the improved pedal-driven chain wheel recommended herein, making reference to the accompanying diagram which shows, by way of an example that is not limiting, a preferable form that can incorporate any variation in detail provided that it does not substantially alter the basic characteristics of those improvements.

The plan shows:

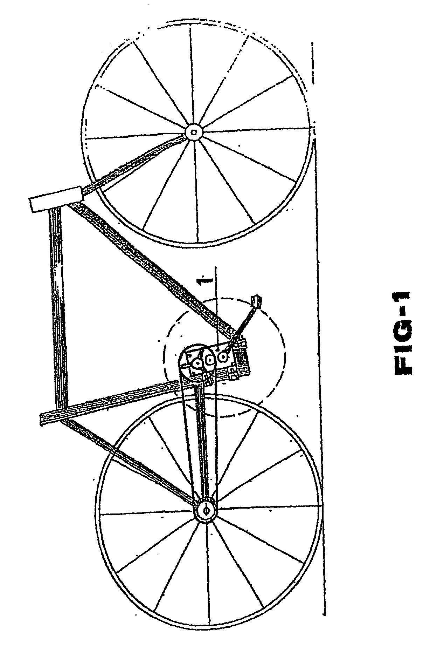

In figure 1, a diagram of a bicycle fitted with the improved pedal-driven chain wheel.

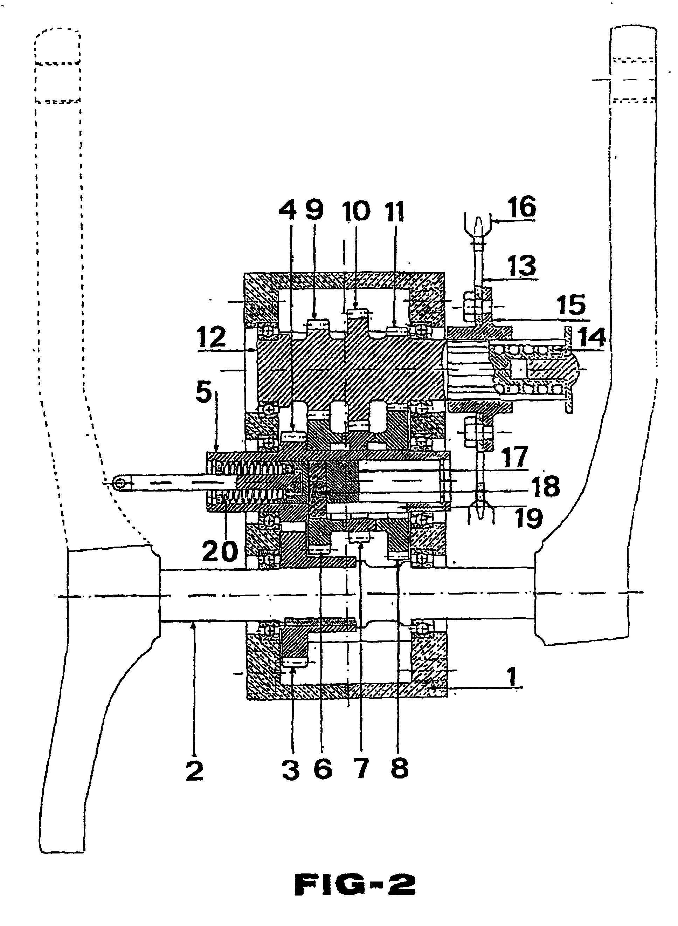

In figure 2, a section of the improved pedal-driven chain wheel.

According to the example shown, the improvements incorporated in the improved pedal-driven chain wheel referred to in this invention consist of the creation of a new device comprising a casing (1) surrounding the pedal drive axle (2), which has a gear ring (3) to transmit motion to another axle (5) that is parallel to the previous one and has a gear cog (4) that meshes with the former. At one end of this second axle (5) is a drum with three gear rings (6, 7 and 8), which in turn engage with another set of three gear rings (9, 10, 11) that are integral with a third axle (12) which is also parallel to the previous ones. The aforementioned gears (6, 7 and 8) of the second axle (5) turn freely, except for one that is secured by a key (18) which protrudes from a bolt (17) and can be moved axially along a key slot (19), driven by a spring-loaded mechanism (20) at the other end of the axle (5), which protrudes from the aforementioned casing (1). Thus, by activating the spring mechanism (20), the aforementioned key (18) is shifted and one or another of the different gear rings (6, 7 and 8) is clamped, thus varying the speed ratio between the second axle (5) and the third axle (12), which finally shifts the toothed sprocket wheel (13) which is located outside the casing (1) and is secured to the third axle (12) by means of a movable bearing (15) consisting of a sleeve that is screwed on to the sprocket wheel (13) and moves freely along the end of the axle (12) by means of a ball bearing system (14). In this way, by allowing the toothed sprocket wheel (13) to move lengthways along its axle, the alignment of the toothed driving sprocket, the toothed rear wheel sprocket and traction chain is guaranteed, preventing the latter from accidentally coming off. In addition, in order to provide greater guarantees, the toothed sprocket (13) also incorporates a guard (16) that is fitted around its teeth.

This improved pedal-driven chain wheel also allows a wide range of speed combinations (from a 1-1 ratio to 6-1), and prevents the chain from coming off the chain wheel thanks to the use of a unique toothed disk (13) fitted with a guard (16).

Furthermore, the improved pedal-driven chain wheel described herein can be combined with rear hub systems to achieve a greater number of speed combinations, ensuring that the chain wheel and rear wheel sprocket remain on the same plane, thanks to the sideways shift mechanism of the toothed disk, which is incorporated into the device.

Lastly, the form, materials and dimensions can vary, as can, in general, all accessories and secondary features, provided that they do not alter, change or modify the basic nature of the improvements described herein.

## Claims

1. Pedal-driven chain wheel consisting of a gear-change system relating to the toothed sprocket wheel (13) of a pedal-driven traction system said gear-change system having two gear drums (6, 7, 8) (9, 10, 11) located opposite each other, the first of which (6, 7, 8) being activated by turning the pedals and the gear rings of the second drum (9, 10 and 11) being integral with their axle, (12) which is connected to the toothed sprocket (13), **characterised in that** said first drum (6,7,8) transmits motion to only one of its gear rings which is clamped by a key (18) that moves along a key slot (19) running the length of the drum, the rest of the gear rings remaining free.

2. Pedal-driven chain wheel according to claim 1, **characterised in that** the rotational movement of the pedal axle (2) is transmitted to the first gear drum (6, 7, 8) by the interaction of gear rings (3,4) in consonance with their respective axles (2,5).

3. Pedal-driven chain wheel according to any of the previous claims, **characterised in that** the key (18) for the first gear drum (6, 7, 8), is embedded in a bolt (17) and moves along a key slot (19) that is driven by a spring mechanism activated by a lever protruding from a casing (1) of the gear-change system.

4. Pedal-driven chain wheel according to any of the previous claims, **characterised in that** the toothed sprocket (13) is mounted on a bearing (15) that can be slid along the length of its axle by means of a ball bearing system (14).

5. Pedal-driven chain wheel according to any of the previous claims, **characterised in that** the toothed sprocket (13) incorporates a guard (16) shaped like a protective groove fitted around its teeth.

## Patentansprüche

1. Pedalangetriebenes Kettenrad, bestehend aus einem Gangwechselsystem, welches sich auf das verzahnte Kettenrad (13) eines pedalangetriebenen Traktionssystems bezieht, wobei das Gangwechselsystem zwei Gangtrommeln (6, 7, 8)(9, 10, 11) aufweist, welche sich gegenüberliegend bzw. entgegengesetzt zueinander befinden, wobei das erste davon (6, 7, 8) durch Drehen der Pedale aktiviert wird und die Gangringe der zweiten Trommel (9, 10 und 11) integral mit ihrer Achse (12) sind, welche mit der verzahnten Kette (13) verbunden ist, **dadurch gekennzeichnet daß** die erste Trommel (6, 7, 8) ein Bewegung an nur einen seiner Gangringe überträgt, welcher durch einen Keil bzw. Splint (18) geklemmt ist, der sich entlang einer Keilnut (19) bewegt, welche entlang der Länge der Trommel läuft, wobei der Rest der Gangringe frei bleibt.

2. Pedalangetriebenes Kettenrad nach Anspruch 1, **gekennzeichnet dadurch, daß** die Drehbewegung der Pedalachse (2) an die erste Gangtrommel (6, 7, 8) durch die Interaktion der Gangringe (3, 4) in Übereinstimmung mit ihren entsprechenden Achsen (2, 5) Übertragen wird.

3. Pedalangetriebenes Kettenrad nach einem der vorhergehenden Ansprüche, **gekennzeichnet dadurch, daß** der Keil (18) für die erste Gangtrommel (6, 7, 8) in einen Bolzen (17) eingebettet ist und sich entlang einer Keilnut (19) bewegt, welche durch einen Federmechanismus angetrieben ist, welcher durch einen von einem Gehäuse (1) des Gangwechselsystems hervorragenden Hebel aktiviert wird.

4. Pedalangetriebenes Kettenrad nach einem der vorhergehenden Ansprüche, **gekennzeichnet dadurch, daß** das verzahnte Kettenrad (13) auf eine Lager (15) montiert ist, welches entlang der Länge seiner Achse mittels eines Kugellagersystems (14) verschoben werden kann.

5. Pedalangetriebenes Kettenrad nach einem der vorhergehenden Ansprüche, **dadurch gekennzeichnet, daß** das verzahnte Kettenrad (13) einen Schutz (16) beinhaltet, welcher wie eine schützende Nut geformt ist, welche um seine Zähne paßt.

## Revendications

1. Plateau motrice à pédales qui consiste en un système d'engrenages pour changement de vitesse associé au plateau denté (13) d'un système de traction à pédales, ayant ledit système d'engrenages deux tambours d'engrenages (6, 7, 8) (9, 10, 11) l'un face à l'autre, le premier desquels (6,7,8) est activé par le mouvement de virement des pédales et, à son tour transmis à un seul des engrenages de celui-ci, qui est accroché par une clavette (18) qui se déplace par une fente clé (19) tout au long du tambour, le reste des engrenages demeurant, les engrenages du deuxième tambour (9, 10, 11) étant solidaires à son axe (12), qui se trouve relié avec le plateau denté (13), caractérisé dans le premier tambour (6, 7, 8)

2. Plateau motrice à pédales, selon la revendication 1, **caractérisé par le fait que** le mouvement de virement de l'axe (2) des pédales est transmis au premier tambour d'engrenage (6, 7, 8) au moyen d'un jeu d'engrenages (3, 4) solidaire avec les respectifs axes (2, 5).

3. Plateau motrice à pédales, selon une des revendications antérieures, **caractérisé par le fait que** la clavette (18), associée au premier tambour d'engrenage (6, 7, 8) emboutie dans un boulon (17), et se déplace par une fente clé poussé par un mécanisme de ressort déclenché par un levier dépassant de la carcasse du système d'engrenage (1).

4. Plateau motrice, selon une des revendications antérieures, **caractérisé par le fait que** le plateau denté (13) est monté sur un support (15) glissant tout au long de son axe au moyen d'un système de roulement à billes.

5. Plateau motrice à pédales, selon les revendications antérieures, **caractérisé par le fait que** le plateau denté (13) incorpore une défense (16) ayant la forme d'un canal de protection autour de ses dents.
